# EUROPEAN PATENT APPLICATION

(11) **EP 2 933 971 A1**
(43) Date of publication of application: **21.10.2015**
(21) Application number: 13861609.9
(22) Date of filing: 13.12.2013
(51) Int. Cl.: H04L 29/06

(54) **METHOD AND DEVICE FOR PROVIDING DNS SERVICE**

(30) Priority: 14.12.2012 KR 20120146707
(71) Applicant: Cdnetworks Co., Ltd., Seoul 135-935 (KR)
(72) Inventor: CHOI, Jun-Ho, Seoul 151-051 (KR)
(74) Representative: Kuhnen & Wacker
(86) International application number: PCT/KR2013/011593
(87) International publication number: WO 2014/092505

(57) **Abstract**

Disclosed herein is a Domain Name Server (DNS) service providing method and apparatus. In an embodiment of the present invention, when a domain name resolution request is received from a local DNS server, a host record for a domain of the domain name resolution request is requested and received from a user DNS server, and a response to the domain name resolution request is sent to the local DNS server, using the received host record. According to the present invention, it beneficially allows the effective addition or modification of a DNS zone file and thus provides a DNS service more promptly and accurately.

## Description

### Technical Field

The present invention generally relates to a DNS service providing method and apparatus and, more particularly, to a DNS service providing method and apparatus able to provide DNS services without separately storing a DNS zone file.

### Background Art

As well known to those skilled in the art, Domain name System or Domain Name Server (DNS) services are name services mainly used in Transfer Control Protocol/Internet Protocol (TCP/IP) networks, which enables a domain name made up of letters for people to easily remember to be converted to an Internet address made up of numbers that can be processed by a computer to access to a device such as a server.

A domain name is an Internet address having a meaningfully given name and is set up for people to easily remember. However, a number-based IP address is needed to actually locate a computer on the Internet.

Since a server operated by each website has a unique IP address, when a user types a letter-based address, the address is converted to an IP address recognizable to the server through the DNS server such that the website can be accessed.

With the DNS server having domain information and IP address information of respective sites, upon reception of a request to get access to a website, the DNS service analyzes the request, and connects the user to a server of the website that has a corresponding IP address.

For the DNS service, there is a file including data that describes a part of a particular domain name, which is called DNS zone data or a DNS zone file.

The DNS zone file includes information required to resolve a domain name into IP numbers, i.e., it includes a domain name and associated subdomain, IP address information, mail server information, etc.

In general, the DNS zone file is composed of address record, CNAME, main record, Time Ti Live (TTL), etc.

The DNS zone file is necessarily stored in especially an authoritative DNS server able to autonomously and directly respond with a number-based IP address to a DNS resolution request (DNS query), among DNS servers for providing DNS services.

Information to resolve the domain name has thus far been relatively less required, so the DNS zone file has stored reasonable amount of data.

However, as the structure of modern networks is becoming more complex, the amount of data to be stored in the DNS zone file is increasing as well.

Accordingly, addition or modification of the DNS zone file requires much time, and devices that configure DNS systems each having to have a DNS zone file require much storage space.

Especially, if the content of the DNS zone file is changed or deleted, the user who wants to receive the DNS service needs to update the authoritative DNS servers with all the modified DNS zone files.

Furthermore, addition or modification of the DNS zone file requires much time, and especially if the addition or modification of the DNS zone file is not performed at the same time, errors might occur in the DNS service.

### Disclosure

### Technical Problem

Accordingly, the present invention has been made keeping in mind the above problems occurring in the prior art, and an object of the present invention is to provide a Domain Name Server (DNS) service providing method and apparatus that effectively allows addition or modification of a DNS zone file even when the DNS zone file is large in size.

Another object of the present invention is to provide a DNS service providing method and apparatus that prevents error occurrence during the DNS service by effectively allowing addition or modification of a DNS zone file.

Other objects of the present invention will be easily understood in the following description of various embodiments of the invention.

### Technical Solution

In accordance with an aspect of the present invention to accomplish the above objects, there is provided a DNS service providing method.

In accordance with an aspect of the present invention, a DNS service providing method is provided. The DNS service providing method performed by an authoritative DNS server in a DNS system including a client, a local DNS server, the authoritative DNS server, and a user DNS server, includes receiving a domain name resolution request from the local DNS server; requesting and receiving a host record for a domain associated with the received domain name resolution request from the user DNS server; and sending a response to the domain name resolution request to the local DNS server, using the received host record.

The DNS system may include multiple authoritative DNS servers, and requesting and receiving a host record for a domain associated with the received domain name resolution request from the user DNS server may include requesting and receiving the host record from another authoritative DNS server among the multiple authoritative DNS servers instead of the user DNS server.

The host record may include domain name, Internet Protocol address information, Time to Live (TTL) information.

The received host record may be temporarily stored in the authoritative DNS server according to the TTL information.

The DNS system may include multiple user DNS servers, and requesting a host record for a domain associated with the received domain name resolution request from the user DNS server may include searching for a user DNS server that matches a domain name of the domain name resolution request and requesting the host record from the user DNS server searched for.

The authoritative DNS server may further include DNS look-up table information having IP addresses matched with domain names, and sending a response to the domain name resolution request to the local DNS server, using the received host record request from the user DNS server may include selecting a matching IP address from the DNS look-up table and responding with the IP address.

In accordance with another aspect of the present invention, a DNS service providing apparatus is provided. The DNS service providing apparatus included in a DNS system having a client, a local DNS server, and a user DNS server, the DNS service providing apparatus includes a communication unit for receiving a domain name resolution request from the local DNS server, requesting and receiving a host record for a domain associated with the received domain name resolution request from the user DNS server, and sending a response to the domain name resolution request to the local DNS server, using the received host record; and a host record storage for storing the host record received from the user DNS server.

The DNS system may include multiple authoritative DNS servers, and the communication unit for requesting and receiving a host record for a domain associated with the received domain name resolution request from the user DNS server may request and receive the host record from another authoritative DNS server among the multiple authoritative DNS servers instead of the user DNS server.

The host record may include domain name, Internet Protocol address information, and Time to Live (TTL) information.

The received host record may be temporarily stored in the host record storage according to the TTL information.

The DNS system may include multiple user DNS servers, and the host record storage may further store user DNS server information that matches with the domain name of the domain name resolution request, and requesting a host record from the user DNS server may include searching for a user DNS server that matches a domain name of the domain name resolution request and requesting the host record from the user DNS server searched for.

The host record storage may further store DNS look-up table information having IP addresses matched with domain names, and sending a response to the domain name resolution request to the local DNS server, using the received host record request from the user DNS server may include selecting a matching IP address from the DNS look-up table and responding with the IP address.

In accordance with another aspect of the present invention, provided is a processor-executable recording program having a program for carrying out a DNS service providing method performed by an authoritative DNS server in a DNS system including a client, a local DNS server, the authoritative DNS server, and a user DNS server. The DNS service providing method includes receiving a domain name resolution request from the local DNS server; requesting and receiving a host record for a domain associated with the received domain name resolution request from the user DNS server; and sending a response to the domain name resolution request to the local DNS server, using the received host record.

The DNS system may include multiple authoritative DNS servers, and requesting and receiving a host record for a domain associated with the received domain name resolution request from the user DNS server may include requesting and receiving the host record from another authoritative DNS server among the multiple authoritative DNS servers instead of the user DNS server.

The host record may include domain name, Internet Protocol address information, Time to Live (TTL) information.

The received host record may be temporarily stored in the authoritative DNS server according to the TTL information.

The DNS system may include multiple user DNS servers, and requesting a host record for a domain associated with the received domain name resolution request from the user DNS server may include searching for a user DNS server that matches a domain name of the domain name resolution request and requesting the host record from the user DNS server searched for.

The authoritative DNS server may further include DNS look-up table information having IP addresses matched with domain names, and sending a response to the domain name resolution request to the local DNS server, using the received host record request from the user DNS server may include selecting a matching IP address from the DNS look-up table and responding with the IP address.

### Advantageous Effects

As described above, the DNS service providing method and apparatus according to the present invention provide the advantage of allowing the DNS zone file to be effectively added or modified.

Further, the present invention provides another advantage of allowing the DNS zone file to be effectively added or modified, thus more promptly and accurately offering the DNS service.

### Description of Drawings

FIG. 1 is a block diagram of a Domain Name Service (DNS) system that employs a DNS service providing method, according to an embodiment of the present invention;
FIG. 2 is a flowchart illustrating a DNS service providing method, according to an embodiment of the present invention; and
FIG. 3 is a block diagram of a DNS service providing apparatus, according to an embodiment of the present invention.

### Best Mode

The present invention may be modified in various manners and may have various embodiments, so that specific embodiments are intended to be illustrated in the drawings and described in detail in the present specification. However, it should be understood that the present invention is not intended to limit the specific embodiments and the present invention includes all changes, equivalents or modifications included in the spirit and scope of the present invention.

Like numbers refer to like elements throughout the drawings. Descriptions of some well-known technologies that possibly obscure the invention will be omitted.

Terms like 'first', 'second', etc., may be used to indicate various components, but the components should not be restricted by the terms. These terms are only used to distinguish one element, component, region, layer or section from another region, layer or section.

For example, the first component may be termed as the second component, and vice versa, within the scope of the present invention.

Descriptions shall be understood as to include any and all combinations of one or more of the associated listed items when the items are described by using the conjunctive term "~ and/or ~," or the like.

When the term "connected" or "coupled" is used, a component may be directly connected or coupled to another component or may be indirectly connected or coupled to another component via another new component.

However, if a component is said to be "directly connected" or "directly coupled" to another component, it should be interpreted in a literal sense.

The terminology used herein is for the purpose of describing particular embodiments only and is not intended to limit the invention.

It is to be understood that the singular forms "a," "an," and "the" include plural references unless the context clearly dictates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Embodiments of the present invention will now be described with reference to accompanying drawings, where like numbers refer to like elements throughout, and the overlapping description will be omitted.

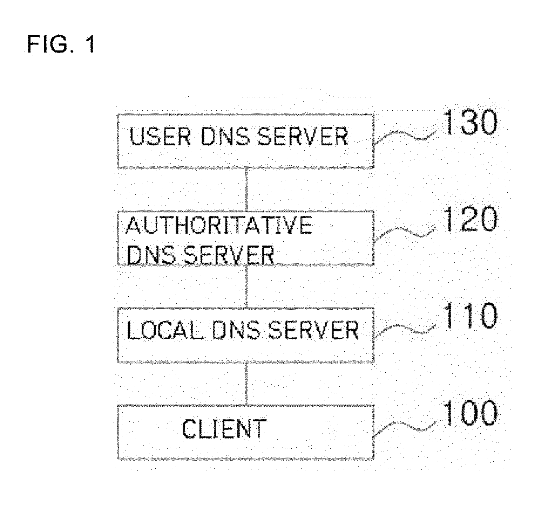

Referring to FIG. 1, a Domain Name Server (DNS) service providing system that employs a DNS service providing method according to an embodiment of the present invention will now be described first.

FIG. 1 is a block diagram of a DNS system that may employ a DNS service providing method according to an embodiment of the present invention.

As shown in FIG. 1, the DNS system may include a client 100, a local DNS server 110, an authoritative DNS server 120, and a user DNS server 130.

There may be multiple ones for each of the components of the DNS system, although only one for each is herein illustrated and described for convenience of explanation.

First, the client 100 is a device that is able to get access to a server desired by the user through a DNS service, e.g., a Personal Computer (PC), notebook, smartphone, touch pad, or any device that is able to connect to a communication network and access a certain server by inputting a domain name through a web browser installed therein.

The local DNS server 110 may first receive a request to resolve a letter-based domain name input to the client 100.

If the local DNS server 110 is capable of resolution of the received domain name, it may immediately send an Internet Protocol (IP) address made up of numbers to the client 100.

Otherwise, if the local DNS server 110 is incapable of resolution of the received domain name, it may forward the request to resolve the domain name to an upper DNS server.

And then, in response to the request, the upper DNS server may send a result of resolving the domain name, i.e., an IP address, back to the local DNS server 110, which in turn forwards the IP address to the client 100.

In the meantime, as for the upper DNS server, there may be an occasion to go through multiple upper DNS servers in stages, and an upper DNS server responsible for returning the IP address to a DNS query is called an authoritative DNS server 120.

Since the authoritative DNS server 120 needs to respond with an IP address made up of numbers to a DNS resolution request (or DNS query) by itself, it needs to store a DNS zone file.

Moreover, in the majority of modern network configurations, there may be multiple authoritative DNS servers 120 and the multiple authoritative DNS servers 120 need to store the same DNS zone file at the same time.

Accordingly, many errors might occur in the process of uploading the DNS zone file to the authoritative DNS server 120, and especially as the DNS zone file becomes large in size, updating the DNS zone file requires much time.

To solve the problem, the present invention further introduces a separate user DNS server 130 to be connected to the authoritative DNS server 120.

The user DNS server 130 is a server for allowing the user who wants to receive a DNS service to upload an original copy of the DNS zone file.

The term 'DNS server' is an exemplary name for convenience of explanation, and any separate server that allows uploading of an original copy of the DNS zone file may be included in the user DNS server 130.

Thus far, the user who wants to receive the DNS service has not been offered any separate server, or even if the separate server was offered to the user, it has been only used for simple comparison and backup of DNS information including the DNS zone file but not connected to the authoritative DNS server 120.

However, in the present invention, the user DNS server 130 is connected to the authoritative DNS server 120, as shown in FIG. 1.

In the meantime, to serve as an authoritative DNS with respect to a DNS resolution request directly from the local DNS server 110 or from the local DNS server 110 through another DNS server, the authoritative DNS server 120 in accordance with the present invention needs to be designated as an authoritative Name Server (NS) for the corresponding domain by a domain name registration agency, though not exclusively.

Providing a DNS service by the DNS system with the aforementioned configuration in accordance with the present invention will now be described in comparison with the conventional DNS service.

First, as for the conventional DNS service, when the client 100 sends a domain name resolution request to the local DNS server 110, the local DNS server 110 forwards the domain name resolution request to the authoritative DNS server 120, the authoritative DNS server 120 sends the local DNS server 110 an IP address according to pre-stored DNS zone file information, the local DNS server 110 forwards the IP address to the client 100, and finally the client 100 gets access to a desired server (not shown).

In the conventional DNS system, providing the DNS is enabled only when all the DNS zone files have been stored in the authoritative DNS server 120 in advance.

The DNS zone file in particular is a file including data to describe a part of a domain name, including information required to resolve the domain name into IP numbers, i.e., domain name and associated subdomain, IP address, mail server information, etc.

The DNS zone file may be configured as follows, for example.

As for $TTL xxx in the configuration of the DNS zone file, xxx corresponds to numbers that represent a term of validity of the DNS zone file present in the server in unit of second.

@ refers to a domain, meaning a domain name set up in the named.conf file.

IN SOA name server. administrator mail is a construction declared that the name server registered in the domain has all information.

For the name server part, a name server address is recorded like ns.dns.com, and then a mail address of the administrator is recorded.

As for xxx; serial (d.adams), xxx is written in a date format and recognized as a kind of identification number for the zone file.

xH;refresh corresponds to a cycle of checking if there is content modified from a lower (second) name server to an upper (first) name server, and xxM;retry is time set up as a cycle of continuing to try an access to the first name server if the second name server fails to access the first name server.

xW;expiry is a time determining that the corresponding domain is deleted or abandoned, when the second name server periodically checks but fails to be connected to the first name server.

xD);minimum means the same thing as Time to Live (TTL), IN NS name server address is a record to designate a name server of the corresponding domain, and www IN A IP ADDRESS, ftp IN A IP ADDRESS, mail IN A IP ADDRESS, etc., are records that represent an actual address of the domain.

The DNS zone file with the configuration may then provide the DNS service according to the information included in the DNS zone file, and the DNS zone file is configured by the user who wants to use the DNS service.

In the conventional DNS system, if there are multiple authoritative DNS servers 120, all the authoritative DNS servers 120 need to have the same DNS zone file in order for the user to be offered a consistent service at anywhere.

If there is only one or a few authoritative DNS servers 120, addition or modification of the DNS zone file is rather simple. Accordingly, the DNS service is less affected by the addition or modification.

However, as the structure of modern networks is becoming complex, the number of the authoritative DNS servers 120 and the size of the DNS zone file is increasing as well, thereby requiring much time to add or modify the DNS zone file for the authoritative DNS servers 120 and possibly failing to provide a correct DNS service during the addition or modification of the DNS zone file.

Especially, after addition or modification of the DNS zone file, DNS service errors are more likely to occur, as in an actual incident wherein it was revealed that errors in accessing a famous portal site were caused from DNS service errors due to replacement of the DNS zone file.

In the meantime, the DNS zone file is different from a DNS look-up table that matches a domain name to an IP address.

As for the DNS look-up table, if a DNS server that has no DNS look-up table receives the domain name resolution request, it receives DNS look-up table information from an upper or other DNS server, and responds to the domain name resolution request and serves as a cache that temporarily stores the DNS look-up table.

In the present invention, it is possible to receive the DNS zone file, especially not all the DNS zone file but even a part of the DNS zone file from another DNS server, as in the case of receiving the DNS look-up table, thereby actively dealing with addition or modification of the DNS zone file.

For this, it is set to receive only a host record in the DNS zone file, including minimum information that enables responding to a DNS resolution request, only when the domain name resolution request is received.

In other words, if the domain name resolution request is received by the authoritative DNS server 120 after the authoritative DNS server 120 is connected to the user DNS server 130, it is set to search for a user DNS server 130 for the corresponding domain, access the user DNS server 130, and bring only the host record from the DNS zone file of the domain.

Furthermore, if there are multiple authoritative DNS servers 120, it is also possible to access another authoritative DNS server 120 to send a request for the host record for the domain and in return, receive the host record.

The host record is a part of the DNS zone file, including domain name, IP address information, TTL, class, and other attributes.

A set of such host records corresponds to the DNS zone file, and for example, a host for domain name foo.com may be diversely configured with mail.foo.com, picture.foo.com, video.foo.com, etc.

Accordingly, the DNS zone file is configured with the set of host records, and in the present invention, only a host record for a host for which the DNS resolution request is received is received from the user DNS server 130 or another authoritative DNS server 120.

The DNS zone file in particular, includes information about all zones associated with the domain name while in the present invention, a host record, which is a part of the DNS zone file, is set to be received only for a domain that receives the DNS resolution request, thereby reducing an amount of data to be sent and/or received.

Furthermore, implementing the cache function for temporarily storing the received host record in the authoritative DNS server 120 may eliminate the need of the authoritative DNS server 120 to keep holding the DNS zone file.

Even as for the DNS zone file, data is not received and cached for all domain names in the DNS zone file basis, but received and cached in the basis of the host record associated with the domain name resolution request.

For example, as described above, if there is a DNS service user for foo.com domain, there may be various host names like mail.foo.com, picture, foo.com, video.foo.com, etc.

For example, if the domain name resolution request received via the local DNS server 110 is about one of them, the user DNS server 130 for foo.com domain or another authoritative DNS server 120 only receives a host record for the one and responds to the DNS resolution request, and optionally store the host record in the authoritative DNS server 120.

In the meantime, as for a host record in the DNS zone file, which is configured only with information required for the DNS resolution, if the host record is received from another device and cached as is the look-up table, a time delay may occur because the authoritative DNS server 120 accesses the user DNS server 130 or another authoritative DNS server 120 and receives the host record.

However, if not much time is consumed in requesting and receiving the host record because the authoritative DNS server 120 sends a request for the host record to the user DNS server 130 or another authoritative DNS server 120 over a dedicated network or the servers are physically very close to each other, time delay might be negligible.

On the other hand, as modern networks are becoming complex and are configured as global networks, the number of authoritative DNS servers 120 and the size of the DNS zone file increase, and accordingly the authoritative DNS server 120 does not have to store a huge amount of data and is able to promptly deal with the addition or modification of the DNS zone file.

In the meantime, the user DNS server 130 may also be configured differently depending on domain name users, or it is possible for many domain name users to use a single server.

Moreover, if the authoritative DNS server 120 stores all the host records for numerous domain names, an amount of data to be stored in the authoritative DNS server 120 increases in the end, even though the entire DNS zone file is not stored.

Accordingly, the authoritative DNS server 120 receives and stores only a host record for a domain name for which the DNS resolution request is received, thus reducing the amount of data to be stored in the authoritative DNS server 120.

For a domain name for which the DNS resolution request is no longer received, it is desirable to delete the corresponding host record.

For this, TTL included in the host record is used to make the host record automatically deleted after the lapse of predetermined time, and to determine validity of the host record in responding to the DNS resolution request.

This eliminates the need of the authoritative DNS server 120 to store a large amount of data, and allows to effectively deal with addition or modification of the DNS zone file.

Furthermore, host records may be deleted in one batch from the authoritative DNS server 120 by a command, e.g., purge, from the user DNS server 130, making it possible to effectively deal with, e.g., deletion of the DNS zone file and thus more effectively providing the DNS service.

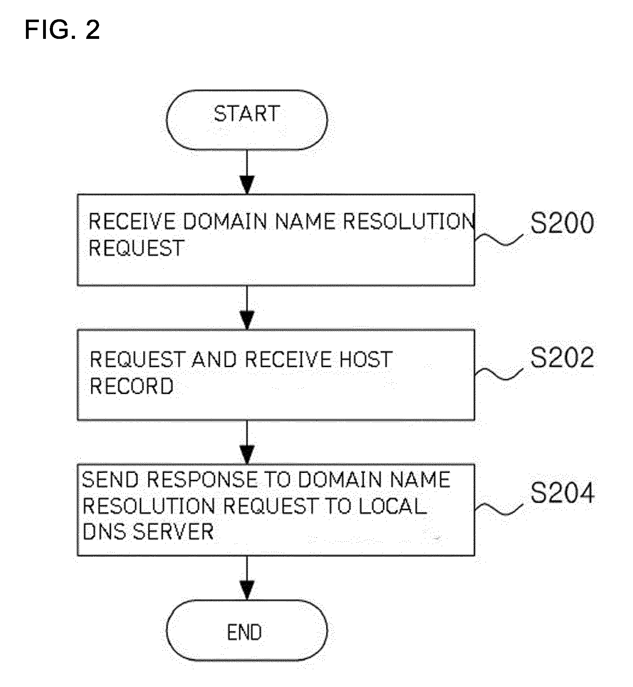

A DNS service providing method in accordance with an embodiment of the present invention will now be described with reference to FIG. 2.

The DNS service providing method will focus on a processing procedure of the authoritative DNS server 120.

FIG. 2 is a flowchart illustrating a DNS service providing method according to an embodiment of the present invention.

As shown in FIG. 2, in the DNS service providing method, first, a domain name resolution request is received from the local DNS server 110, in operation S200.

The domain name resolution request may be received from the client 100 via the local DNS server 110.

It is also possible for the client 100 to get access directly to the authoritative DNS server 120 to request the domain name resolution without being involved with the local DNS server 110. However, such an event seldom occurs by nature of network configuration, so the description thereof will be omitted herein.

Once the domain name resolution request is received, a user DNS server 130 for the corresponding domain is searched for, and only a host record in the DNS zone file required for the DNS resolution is requested and received from the user DNS server 130 of the domain, in operation 202.

Searching for the user DNS server 130 for the domain is performed under an assumption that there may be possibly multiple user DNS servers 130 if the authoritative DNS server 120 is able to send the domain name resolution request for multiple domains.

Thus, if the authoritative DNS server 120 sends the domain name resolution request only for a single domain, the operation of searching for a user DNS server 130 may not be required.

The received host record is used to send a reply to the domain name resolution request to the local DNS server 110, in operation S204.

The local DNS server 110 that receives the reply to the domain name resolution request sends the reply to the client 100, and thus the client 100 is able to get access to a content server.

Although not shown in FIG. 2, the authoritative DNS server may serve as a cache for temporarily storing a host record when receiving the host record.

Time for storage in the authoritative DNS server, i.e., a term of validity may be determined according to the TTL included in the host record, as described above.

The DNS service providing method in accordance with the embodiment of the present invention may be implemented in the form of a program.

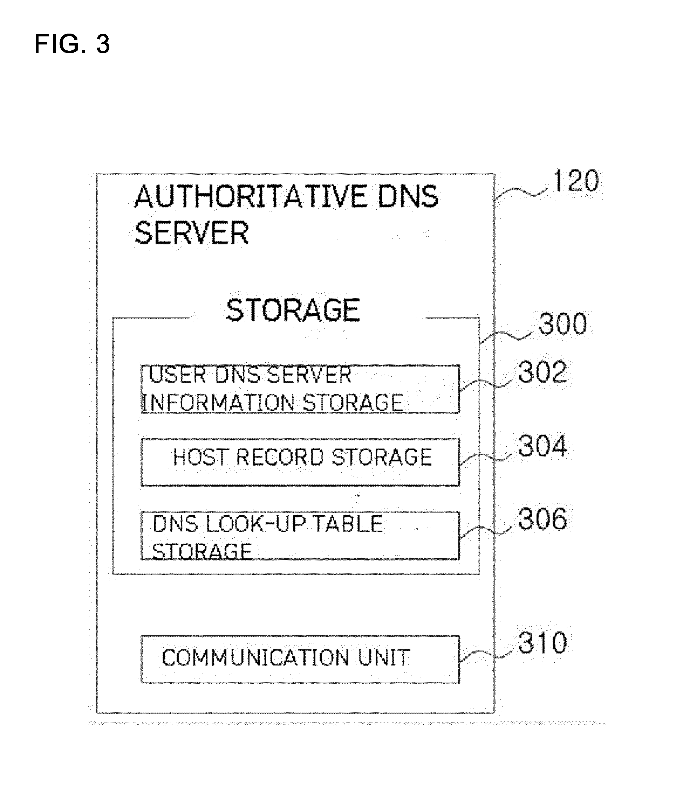

A DNS service providing apparatus, the authoritative DNS server 120, in accordance with an embodiment of the present invention will now be described with reference to FIG. 3.

As described above, unlike the local DNS server 110, the authoritative DNS server 120 corresponds to an upper DNS server that may be able to respond to a DNS resolution request without forwarding the DNS resolution request to another DNS server.

For this, the authoritative DNS server 120 in accordance with the present invention needs to be designated as an authoritative NS of the corresponding domain not exclusively by a domain name registration agency, but in other settings or methods.

FIG. 3 is a block diagram of the authoritative DNS server 120, which is a DNS service providing apparatus according to an embodiment of the present invention.

As shown in FIG. 3, the DNS service providing apparatus may include a storage 300 and a communication unit 310.

The storage 300 may include a user DNS server information storage 302, a host record storage 304, and a DNS look-up table storage 306.

Given that there are multiple domain name users and multiple user DNS servers 130 to which DNS zone files are uploaded, the user DNS server information storage 302 may store domain names and matching user DNS server information.

The host record storage 304 may store host records requested or received from the user DNS server 130 or another authoritative DNS server 120, the host record including information in the DNS zone file, required only for the DNS resolution request.

The host record may be stored in the authoritative DNS server 120 not permanently but temporarily according to the TTL included in the host record.

The host record may include information required only for DNS resolution, including domain name, IP, TTL, class, and/or other attributes, as a part of the DNS zone file.

The DNS look-up table storage 306 may store domain names and matching servers' IP addresses.

The DNS look-up table may also be requested and received from an upper DNS server or other DNS servers and then stored, e.g. temporarily like the host record.

The communication unit 310 may communicate with the local DNS server 110, user DNS server 130, and other authoritative DNS servers 120 over a communication network. The DNS service providing apparatus in accordance with the embodiments of the present invention may be implemented in the form of a program, or as a digital processing apparatus, such as a server having a program installed therein.

The preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A Domain Name Server (DNS) service providing method performed by an authoritative DNS server in a DNS system including a client, a local DNS server, the authoritative DNS server, and a user DNS server, the DNS service providing method comprising:
receiving a domain name resolution request from the local DNS server;
requesting and receiving a host record for a domain associated with the received domain name resolution request from the user DNS server; and
sending a response to the domain name resolution request to the local DNS server, using the received host record.

2. The DNS service providing method according to claim 1,
wherein the DNS system includes multiple authoritative DNS servers, and
wherein requesting and receiving a host record for a domain associated with the received domain name resolution request from the user DNS server comprises
requesting and receiving the host record from another authoritative DNS server among the multiple authoritative DNS servers instead of the user DNS server.

3. The DNS service providing method according to claim 1, wherein the host record includes domain name, Internet Protocol address information, and Time to Live (TTL) information.

4. The DNS service providing method according to claim 3, wherein the received host record is temporarily stored in the authoritative DNS server according to the TTL information.

5. The DNS service providing method according to claim 1,
wherein the DNS system includes multiple user DNS servers, and
wherein requesting a host record for a domain associated with the received domain name resolution request from the user DNS server comprises
searching for a user DNS server that matches a domain name of the domain name resolution request and requesting the host record from the user DNS server searched for.

6. The DNS service providing method according to claim 1,
wherein the authoritative DNS server further includes DNS look-up table information having IP addresses matched with domain names,
wherein sending a response to the domain name resolution request to the local DNS server, using the received host record request from the user DNS server comprises
selecting a matching IP address from the DNS look-up table and responding with the IP address.

7. A Domain Name Server (DNS) service providing apparatus included in a DNS system having a client, a local DNS server, and a user DNS server, the DNS service providing apparatus comprising:
a communication unit for receiving a domain name resolution request from the local DNS server, requesting and receiving a host record for a domain associated with the received domain name resolution request from the user DNS server, and sending a response to the domain name resolution request to the local DNS server, using the received host record; and
a host record storage for storing the host record received from the user DNS server.

8. The DNS service providing apparatus according to claim 7,
wherein the DNS system includes multiple authoritative DNS servers, and
wherein the communication unit for requesting and receiving a host record for a domain associated with the received domain name resolution request from the user DNS server is configured to
request and receive the host record from another authoritative DNS server among the multiple authoritative DNS servers instead of the user DNS server.

9. The DNS service providing apparatus according to claim 7, wherein the host record includes domain name, Internet Protocol address information, and Time to Live (TTL) information.

10. The DNS service providing apparatus according to claim 9, wherein the received host record is temporarily stored in the host record storage according to the TTL information.

11. The DNS service providing apparatus according to claim 7,
wherein the DNS system includes multiple user DNS servers,
wherein the host record storage further stores user DNS server information that matches with the domain name of the domain name resolution request, and
wherein requesting a host record from the user DNS server comprises
searching for a user DNS server that matches a domain name of the domain name resolution request and requesting the host record from the user DNS server searched for.

12. The DNS service providing apparatus according to claim 7,
wherein the host record storage further stores DNS look-up table information having IP addresses matched with domain names,
wherein sending a response to the domain name resolution request to the local DNS server, using the received host record request from the user DNS server comprises
selecting a matching IP address from the DNS look-up table and responding with the IP address.

13. A recording medium having a program for carrying out a Domain Name Server (DNS) service providing method performed by an authoritative DNS server in a DNS system including a client, a local DNS server, the authoritative DNS server, and a user DNS server, the DNS service providing method comprising:
receiving a domain name resolution request from the local DNS server;
requesting and receiving a host record for a domain associated with the received domain name resolution request from the user DNS server; and
sending a response to the domain name resolution request to the local DNS server, using the received host record.
